# EUROPEAN PATENT APPLICATION

(11) **EP 4 707 009 A1**
(43) Date of publication of application: **11.03.2026**
(21) Application number: 25192899.0
(22) Date of filing: 30.07.2025
(51) Int. Cl.: B60K 1/04, B60K 6/20

(54) **PLUG-IN HYBRID ELECTRIC VEHICLE**

(30) Priority: 29.08.2024 JP 2024147278
(71) Applicant: TOYOTA JIDOSHA KABUSHIKI KAISHA, Toyota-shi, Aichi-ken 471-8571 (JP)
(72) Inventor: KOYANAGI, Hirotaka, Toyota-shi, 471-8571 (JP); KUSAKA, Hiroto, Toyota-shi, 471-8571 (JP)
(74) Representative: D Young & Co LLP

(57) **Abstract**

A PHEV of a pickup truck type includes a cabin section having a passenger compartment, a front section including a longitudinal engine, and a cargo section including a cargo bed having an upper opening. In the PHEV of the pickup truck type, an on-board charging unit, which converts electric power supplied from an external power source and supplies the converted electric power to a battery, is arranged downward from the cargo bed of the cargo section.

## Description

### BACKGROUND

### 1. Field

The following description relates to a plug-in hybrid electric vehicle in the form of a pickup truck.

### 2. Description of Related Art

International Publication No. 2008/082012 discloses a plug-in hybrid electric vehicle (PHEV) that has a monocoque structure body.

The PHEV includes a large-capacity battery in addition to two drive sources, which are an engine and a motor. Further, the PHEV includes high-voltage electrical units electrically connected to the battery. Examples of high-voltage electrical units include a power control unit for the motor and an on-board charging unit. In the PHEV disclosed in International Publication No. 2008/082012, the battery is arranged under rear seats.

A pickup truck is a type of vehicle including a cargo bed that has an upper opening and is located behind a vehicle cabin. Many pickup trucks have a body-on-frame structure. A large number of elements are arranged under the floor of a pickup truck, such as a transmission, a drive shaft, an exhaust pipe, a fuel tank, and the like. Therefore, when the pickup truck is a PHEV, the height of the floor has to be raised in the pickup truck to provide space for the battery and the high-voltage electrical unit. However, pickup trucks having cabins and cargo beds that provide a vast amount of space for cargo are demanded by users. If the floor of a pickup truck is raised to arrange the battery and the high-voltage electrical units under the floor, space will be reduced in the vehicle cabin and the cargo bed, in which case, user demands cannot be met. It is an objective of the present invention to provide sufficient space for the battery and the high-voltage electrical units in a pickup truck that is a PHEV.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a plug-in hybrid electric vehicle of a pickup truck type includes an engine configured to generate rotational power through combustion of fuel, in which the rotational power is transmitted to wheels, a rechargeable battery supplied with electric power from an external power source, a motor configured to generate the rotational power with electric power supplied from the battery, an on-board charging unit configured to convert electric power supplied from the external power source and supply the converted electric power to the battery, a power control unit configured to control electric power of the motor, a cabin section including a passenger compartment having a seat where a vehicle occupant is seated, a front section located frontward from the cabin section and including an engine compartment where the engine is arranged, a cargo section located rearward from the cabin section and including a cargo bed having an upper opening, and a frame including left and right side members extending in a front-rear direction, in which the left and right side members located downward from the passenger compartment of the cabin section and located downward from the cargo bed of the cargo section, in which the on-board charging unit is arranged downward from the cargo bed of the cargo section.

Other features and aspects will be apparent from the following detailed description, the drawings, and the claims.

### BRIEF DESCRIPTION OF THE DRAWINGS

Fig. 1 is a side view illustrating the layout of elements in a plug-in hybrid electric vehicle in accordance with a first embodiment.
Fig. 2 is a plan view illustrating a drive system and an underfloor structure of the plug-in hybrid electric vehicle in accordance with the first embodiment.
Fig. 3 is a plan view illustrating the layout of a battery, a power control unit, and an on-board charging unit of the plug-in hybrid electric vehicle in accordance with the first embodiment.
Fig. 4 is a side view illustrating the layout of the power control unit and the on-board charging unit in a first modified example of the plug-in hybrid electric vehicle in accordance with the first embodiment.
Fig. 5 is a plan view illustrating the layout of the battery, the power control unit, and the on-board charging unit in the first modified example.
Fig. 6 is side view illustrating the layout of the battery, power control unit, and the on-board charger unit in a second modified example of the plug-in hybrid electric vehicle in accordance with the first embodiment.
Fig. 7 is a plan view illustrating the layout of the battery, the power control unit, and the on-board charger unit in the second modified example.
Fig. 8 is a side view illustrating the layout of the battery, the power control unit, and the on-board charger unit of a further modified example of the plug-in hybrid electric vehicle in accordance with the first embodiment.
Fig. 9 is a plan view illustrating the layout of the battery, the power control unit, and the on-board charger unit in the further modified example.
Fig. 10 is a side view illustrating the layout of elements in a plug-in hybrid electric vehicles in accordance with a second embodiment.
Fig. 11 is a plan view illustrating the layout of a drive system, a battery, a power control unit, an on-board charger unit, and the like in the plug-in hybrid electric vehicle in accordance with the second embodiment.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

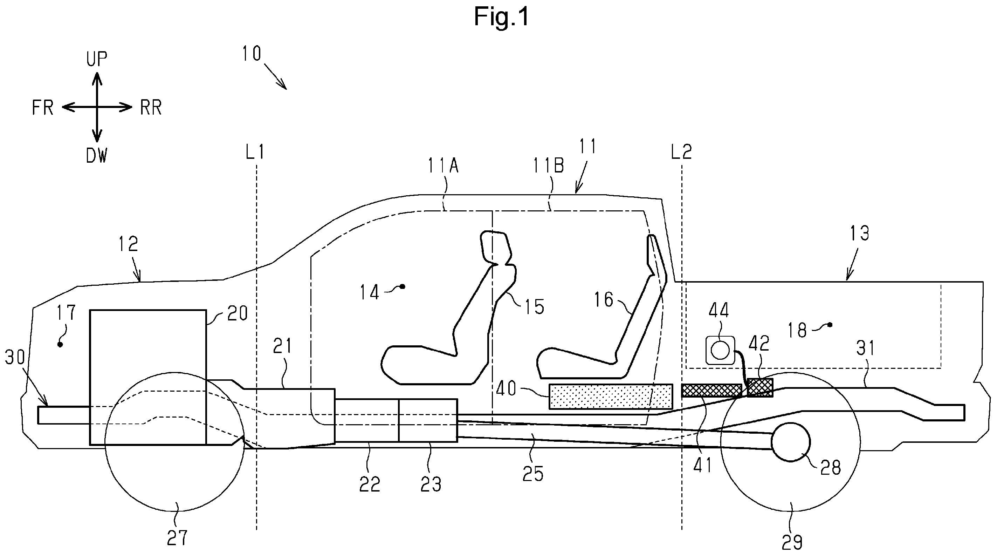

A first embodiment of a plug-in hybrid electric vehicle (PHEV) will now be described with reference to Figs. 1 to 4. The arrows labeled "FR", "RR", "UP", "DW", "LF", and "RF" indicate the frontward, rearward, upward, downward, leftward, and rightward directions, respectively, using the forward moving direction of the vehicle as the frame of reference.

A PHEV 10 includes a battery 40 that is rechargeable by the power supplied from an external power source. Further, the PHEV 10 includes an engine 20 and a motor 22 as drive sources for transmitting generated rotational power to four wheels, which are left and right front wheels 27 and left and right rear wheels 29. The engine 20 generates rotational power through the combustion of fuel. The motor 22 generates rotational power with electric power supplied from the battery 40.

The PHEV 10 in the present embodiment is a pickup truck. The PHEV 10 of the pickup truck type includes three sections: a cabin section 11, a front section 12 that is located in the frontward direction FR from the cabin section 11, and a cargo section 13 located in the rearward direction RR from the cabin section 11. The cabin section 11 includes a passenger compartment 14 where the vehicle occupants are seated. The front section 12 includes an engine compartment 17 in which a longitudinal engine 20 is arranged. In the PHEV 10 of the present embodiment, the engine 20 has cylinders in a V-shaped arrangement. The cargo section 13 includes a cargo bed 18 that is open in the upward direction UP.

In the drawings, the cabin section 11 of the PHEV 10 is defined in the rearward direction RR from a broken line L1 and in the frontward direction FR from a broken line L2. The front section 12 of the PHEV 10 is defined in the frontward direction FR from the broken line L1. The cargo section 13 of the PHEV 10 is defined in the rearward direction RR from the broken line L2. The passenger compartment 14 includes seats on which the vehicle occupants are seated. The seats include front seats 15 and a rear seat 16 that is located in the rearward direction RR from the front seats 15. Further, a front door 11A and a rear door 11B are arranged on each of the left and right sides of the cabin section 11 in the PHEV 10. The vehicle occupants board the PHEV 10 of the present embodiment through the doors 11A and 11B from the sides of the cabin section 11.

The PHEV 10 includes a charging inlet 44 for connecting a charging plug of a charging device extending from an external charging device. The charging inlet 44 is arranged on a side surface of the PHEV 10 in the rearward direction RR from a door 11B. In Fig. 1, the charging inlet 44 is arranged on a left surface of the cargo section 13.

### Structure of Drive System

The structure of a drive system of the PHEV 10 will now be described. The drive system of the PHEV 10 includes the engine 20, a transmission 21, the motor 22, and a transfer case 23. Further, the drive system of the PHEV 10 includes a drive shaft 24 for the front wheels and a drive shaft 25 for the rear wheels. The drive shafts 24 and 25 are each connected by the transfer case 23, the motor 22, and the transmission 21 to the engine 20. Moreover, the drive shaft 24 for the front wheels is connected to the left and right front wheels by a differential 26. The drive shaft 25 for the rear wheels is connected to the left and right rear wheels by a differential 28.

### Underfloor Structure

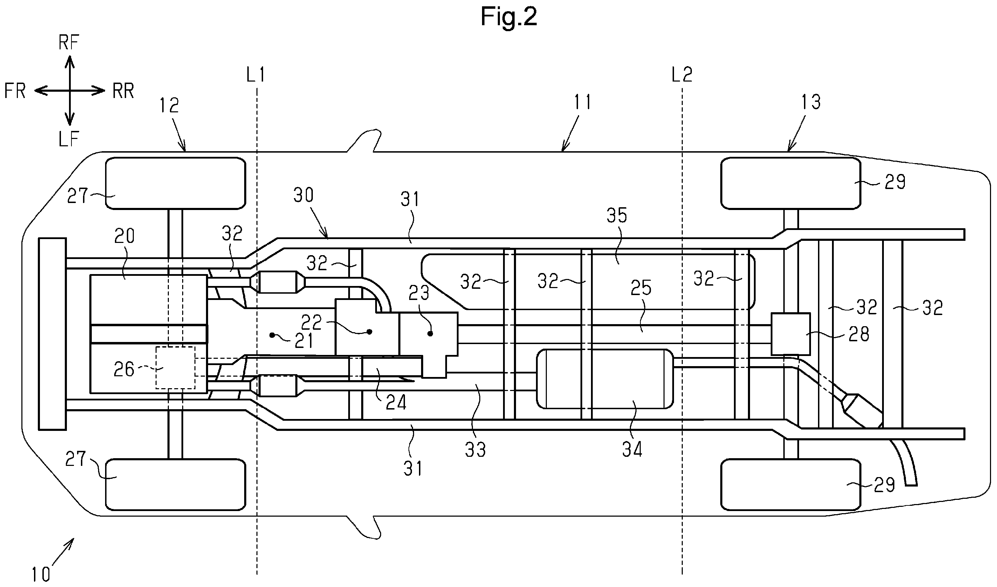

The underfloor structure of the PHEV 10 will now be described with reference to Fig. 2. The underfloor of the PHEV 10 refers to a section located in downward direction DW from the passenger compartment 14 and a floor panel of the cargo bed 18.

A frame 30 is arranged under the floor of the passenger compartment 14 and under the cargo bed 18. The frame 30 is a ladder-shaped frame that includes left and right side member 31 and cross members 32 connecting the two side members 31. The left and right side members 31 extend in the front-rear direction at a part of the cabin section 11 located in the downward direction DW from the passenger compartment 14. As shown in Fig. 2, the drive shaft 25 for the rear wheels extends in the front-rear direction at a part located in the downward direction DW from the passenger compartment 14 of the cabin section 11.

Furthermore, an exhaust pipe 33 is arranged under the floor of the PHEV 10 to guide exhaust gas from the engine 20 in the rearward direction RR. The exhaust pipe 33 extends in the front-rear direction at a part located in the downward direction DW from the passenger compartment 14 of the cabin section 11. A muffler 34 is arranged in the exhaust pipe 33. The muffler 34 is located in the downward direction DW from the passenger compartment 14 of the cabin section 11. Further, a fuel tank 35 containing fuel for the engine 20 is arranged under the floor of the PHEV 10. The drive shaft 25 for the rear wheels is arranged in a section between the exhaust pipe 33 and the fuel tank 35 in the transverse direction.

### Structure of Power Supply System

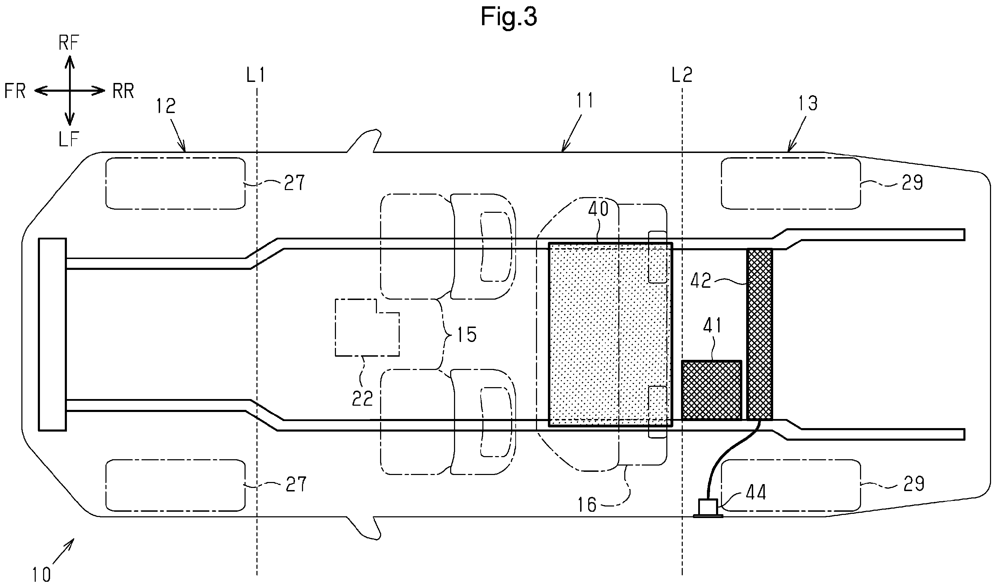

The structure of the power supply system of the PHEV 10 will now be described with reference to Fig. 3.

The PHEV 10 includes a battery 40, which is rechargeable by an external power source. The battery 40 includes cells and a case or the like that accommodates the cells. The battery 40 is connected to the motor 22 by a power control unit 41. The motor 22 is supplied with electric power from the battery 40 and generates rotational power transmitted to the front wheels 27 and the rear wheels 29. The power control unit 41, which executes electric power control on the motor 22, includes an inverter or the like. The battery 40 is connected to the charging inlet 44 by an on-board charging unit 42. The on-board charging unit 42 has a functionality of an on-board charger that charges the battery 40 by converting the electric power supplied from the external power source through the charging inlet 44 and supplying the electric power to the battery 40. The on-board charging unit 42 may also include a power-converting functionality for decreasing the high-voltage power stored in the battery 40 and supplying the decreased power to low-voltage electrical devices of the PHEV 10.

The battery 40 is arranged in the downward direction DW from the rear seat 16 of the cabin section 11 and in the upward direction UP from the side members 31. Further, the power control unit 41 and the on-board charging unit 42 are arranged in the downward direction DW from the cargo bed 18 of the cargo section 13. In the present embodiment, the power control unit 41 and the on-board charging unit 42 are arranged next to each other in the front-rear direction so that the on-board charging unit 42 is located in the rearward direction RR from the power control unit 41. In this case, the power control unit 41 and the on-board charging unit 42 are arranged overlapping with each other in both the transverse direction and the vertical direction.

### Operation and Advantage of First Embodiment

The operation and the advantages of the first embodiment will now be described.

In the PHEV 10 of the present embodiment, the drive shaft 25, the exhaust pipe 33, and the fuel tank 35 are arranged in the downward direction DW from the passenger compartment 14 between the left and right side members 31. Further, the battery 40 is arranged in the downward direction DW from the rear seat 16 of the cabin section 11 and in the upward direction UP from the side members 31. The power control unit 41 and the on-board charging unit 42 are arranged in the downward direction DW from the cargo bed 18 of the cargo section 13. Therefore, even though the PHEV 10 has the frame 30, the drive shaft 25, the exhaust pipe 33, the fuel tank 35, and the like arranged under the floor, the PHEV 10 provides sufficient space allowing for the arrangement of the battery 40, the power control unit 41, and the on-board charging unit 42.

The PHEV 10 of the present embodiment has the advantages described below.
(1) The PHEV 10 of the present embodiment includes the on-board charging unit 42 in the downward direction DW from the cargo bed 18 of the cargo section 13. Thus, even though the PHEV 10 has the drive shaft 25 and the like arranged under the floor, the PHEV 10 provides sufficient space for the arrangement of the on-board charging unit 42 in a facilitated manner.
(2) In the PHEV 10 of the present embodiment, the power control unit 41 is also arranged in the downward direction DW from the cargo bed 18 of the cargo section 13. This provides sufficient space for the power control unit 41 in a facilitated manner.
(3) In the PHEV 10 of the present embodiment, the battery 40 is arranged in the downward direction DW from the rear seat 16 of the cabin section 11 and in the upward direction UP from the side members 31. Thus, in the PHEV 10, the power control unit 41 and the on-board charging unit 42 are arranged at a location separated from the battery 40. This provides sufficient space allowing for the arrangement of the power control unit 41 and the on-board charging unit 42 and for the arrangement of the battery 40 in a facilitated manner. Further, the battery 40 is arranged in the downward direction DW from the rear seat 16. This has a negligible effect on the space provided for the vehicle occupants in the passenger compartment 14.
(4) The power control unit 41 and the on-board charging unit 42 are arranged overlapping each other in both the transverse direction and the vertical direction. This minimizes the space occupied by the power control unit 41 and the on-board charging unit 42 in the transverse direction and the vertical direction.
(5) The charging inlet 44 is arranged in the rearward direction RR from the doors through which the vehicle occupants board the PHEV 10. Further, as described above, the on-board charging unit 42 is arranged in the downward direction DW from the rear seat 16. This facilitates the wirings of the charging inlet 44 and the on-board charging unit 42.

### Modified Examples of First Embodiment

The first embodiment may be modified as described below. The first embodiment and the following modified examples may be combined as long as there is technically consistency.

The layout of the power control unit 41 and the on-board charging unit 42, which are arranged in the downward direction DW from the cargo bed 18 of the cargo section 13, may be modified. For example, in the first embodiment, the arrangement of the power control unit 41 and the on-board charging unit 42 may be reversed in the front-rear direction. In other words, the power control unit 41 and the on-board charging unit 42 may be arranged next to each other in the front-rear direction so that the power control unit 41 is located in the rearward direction RR from the on-board charging unit 42.

Further, the layout of the power control unit 41 and the on-board charging unit 42 may be modified as illustrated in the first and second modified examples described below.

### First Modified Example

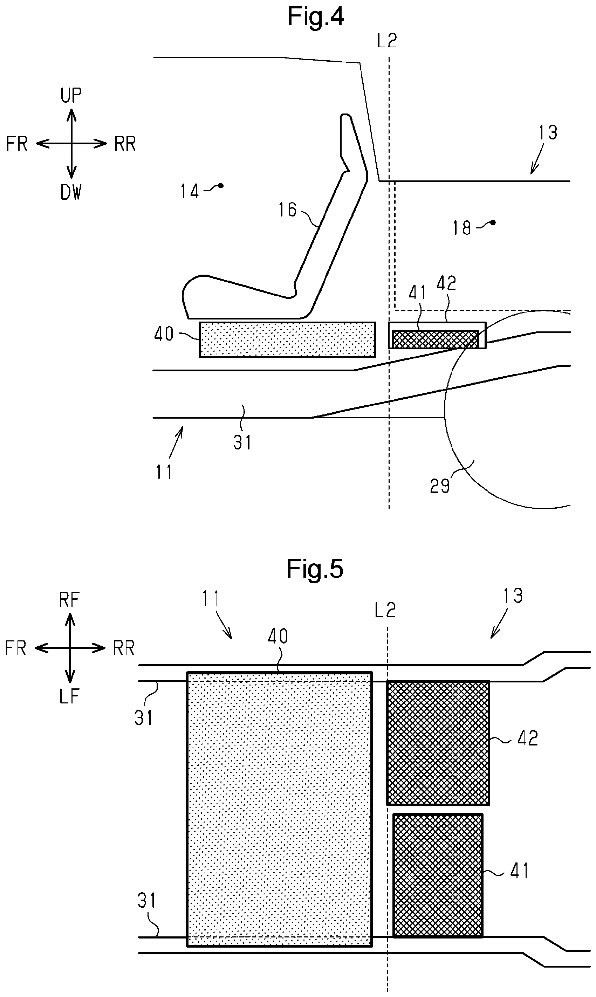

As shown in Figs. 4 and 5, the power control unit 41 and the on-board charging unit 42 may be arranged next to each other in the transverse direction and may be located in the downward direction DW from the cargo bed 18 of the cargo section 13. In Figs. 4 and 5, the on-board charging unit 42 is located in the rightward direction RF from the power control unit 41. Instead, the on-board charging unit 42 may be arranged in the leftward direction LF from the power control unit 41. In this case, the power control unit 41 and the on-board charging unit 42 are arranged overlapping each other in both the front-rear direction and the vertical direction. This minimizes the space occupied by the power control unit 41 and the on-board charging unit 42 in the front-rear direction and the vertical direction.

### Second Modified Example

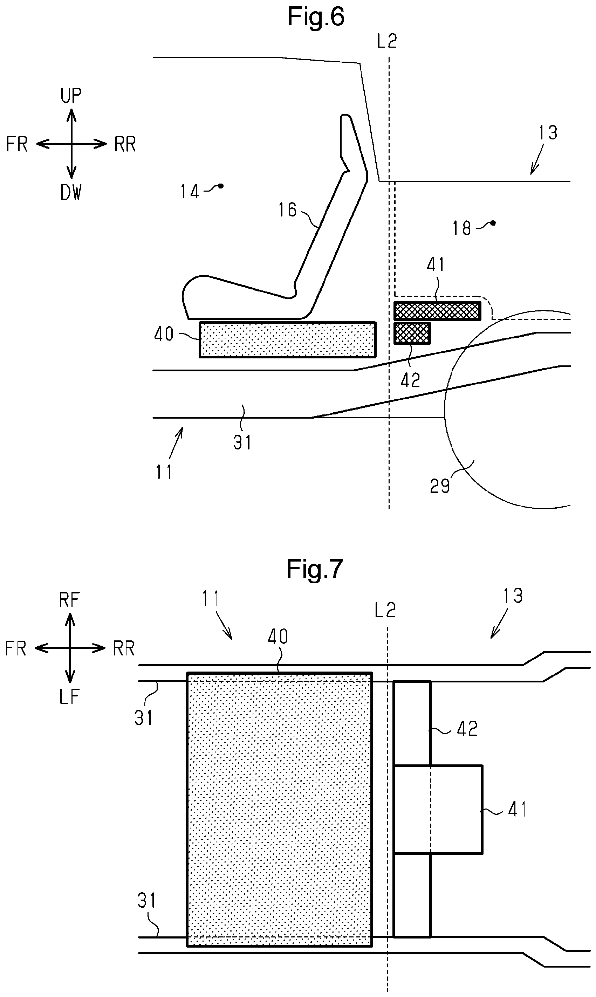

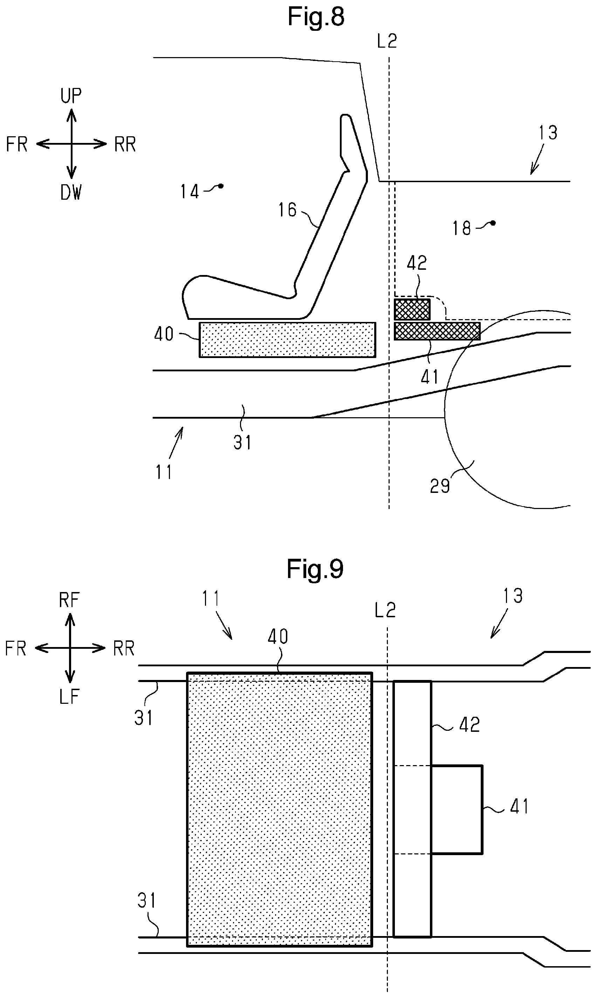

As shown in Figs. 6 and 7, the power control unit 41 and the on-board charging unit 42 may be arranged one above the other in the vertical direction and may be located in the downward direction DW from the cargo bed 18 of the cargo section 13. In Figs. 6 and 7, the on-board charging unit 42 is arranged in the downward direction DW from the power control unit 41. As shown in Figs. 8 and 9, the power control unit 41 and the on-board charging unit 42 may be arranged one above the other in the vertical direction so that the on-board charging unit 42 is arranged in the upward direction UP from the power control unit 41. In such cases, the power control unit 41 and the on-board charging unit 42 are arranged overlapping each other in both the front-rear direction and the transverse direction. This minimizes the space occupied by the power control unit 41 and the on-board charging unit 42 in the front-rear direction and in the transverse direction.

### Second Embodiment

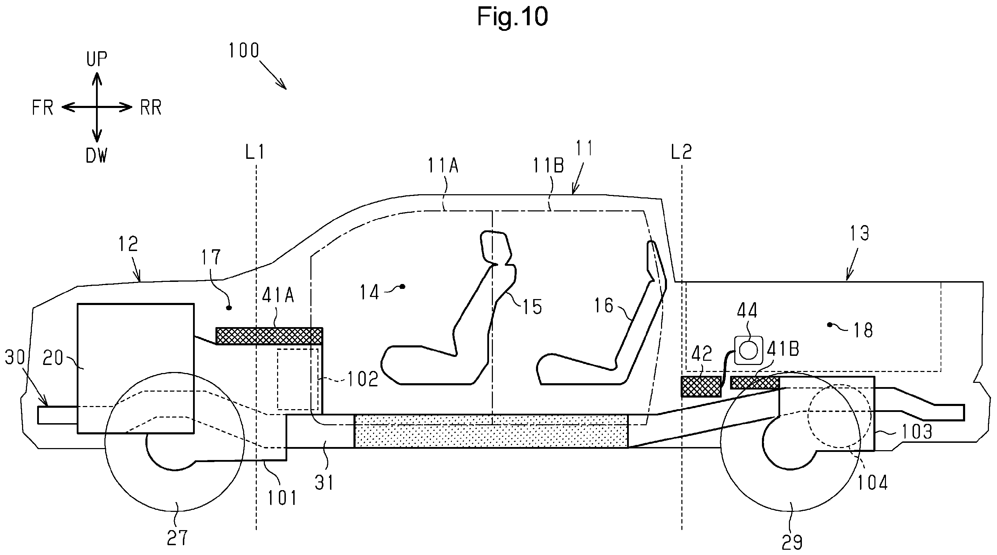

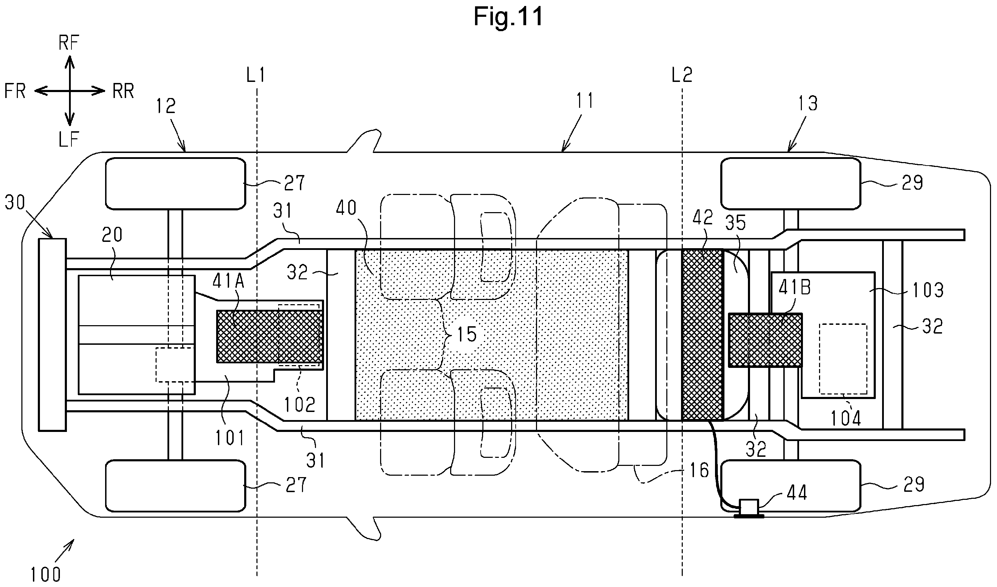

A second embodiment of the plug-in hybrid vehicle will now be described with reference to Figs. 10 and 11. In the present embodiment, same reference numbers are given to those elements that are the same as the above embodiment. Such elements will not be described in detail. Fig. 10 is a side view showing the layout of the drive system and an electrical system in a PHEV 100 of the present embodiment. Further, Fig. 11 is a plan view showing the layout of the drive system and the electrical system.

The PHEV 100 of the present embodiment is a pickup truck that includes three sections, the cabin section 11, the front section 12, and the cargo section 13 in the same manner as the PHEV 10 of the first embodiment. Further, the passenger compartment 14, which includes the front seats 15 and the rear seat 16, is arranged in the cabin section 11. The engine compartment 17, which includes the longitudinal engine 20, is arranged in the front section 12. The cargo bed 18, which is open in the upward direction UP, is arranged in the cargo section 13. Furthermore, the charging inlet 44 is arranged on the side surface of the PHEV 100 in the rearward direction RR from the door 11B.

### Structure of Drive Systems

The structure of the drive systems of the PHEV 100 will now be described. The PHEV 100 includes independent drive systems for the front wheels 27 and the rear wheels 29.

The front wheels 27 of the PHEV 100 are connected to the engine 20 by a front drive module 101. The drive module 101 integrates the elements of the drive system for the front wheels 27. The drive module 101 includes a front wheel motor 102 that generates the rotational power transmitted to the front wheels 27. Further, the drive module 101 includes a transmission, a differential, and the like.

The rear wheels 29 of the PHEV 100 are connected to a rear drive module 103 The drive module 103 integrates the elements of the drive system for the rear wheels 29. The drive module 103 includes a rear wheel motor 104 that generates rotational power transmitted to the rear wheels 29. Further, the drive module 103 includes a reduction gear, a differential, and the like.

### Structure of Electrical System

The structure of the electrical system of the PHEV 100 will now be described.

The PHEV 100 of the present embodiment differs from the PHEV 10 of the first embodiment in that independent drive systems are provided for the front wheels 27 and the rear wheels 29. The PHEV 100 does not include a drive shaft extending in the front-rear direction at a position located in the downward direction DW from the passenger compartment 14 of the cabin section 11. In the PHEV 100, the battery 40 is arranged in the downward direction DW from the passenger compartment 14 of the cabin section 11. More specifically, the battery 40 is arranged between the left and right side members 31 in the downward direction DW from the passenger compartment 14. The fuel tank 35 of the PHEV 100 of the present embodiment is arranged between the left and right side members 31 in the rearward direction RR from the battery 40.

The PHEV 100 includes separate power control units 41A and 41B for the front wheel motor 102 and the rear wheel motor 104, respectively. The front wheel power control unit 41A is arranged in the upward direction UP from the front drive module 101, which incorporates the front wheel motor 102. The rear wheel power control unit 41B, together with the on-board charging unit 42, is arranged in the downward direction DW from the cargo bed 18 of the cargo section 13. In Figs. 10 and 11, the power control unit 41B and the on-board charging unit 42 are arranged next to each other in the front-rear direction so that the on-board charging unit 42 is located in the frontward direction FR from the power control unit 41B. The arrangement of the power control unit 41B and the on-board charging unit 42 in the downward direction DW from the cargo bed 18 of the cargo section 13 may be changed in the same manner as the first embodiment.

### Advantages of Second Embodiment

The PHEV 100 of the present embodiment has the advantages described below.
(1) The on-board charging unit 42 is arranged in the downward direction DW from the cargo bed 18 of the cargo section 13. Thus, the PHEV 100 that does not include the drive shaft 25 and the like arranged under the floor also provides sufficient space for the arrangement of the on-board charging unit 42 in a facilitated manner.
(2) The power control unit 41B, together with the on-board charging unit 42, are arranged in the downward direction DW from the cargo bed 18 of the cargo section 13. Thus, space for the arrangement of the power control unit 41B can also be provided in a facilitated manner.
(3) The battery 40 is arranged between the left and right side members 31. The power control unit 41B and the on-board charging unit 42 are arranged at positions separated from the battery 40. Thus, space for the arrangement of the power control unit 41B and the on-board charging unit 42 is provided in a facilitated manner.
(4) The power control unit 41B and the on-board charging unit 42 are arranged overlapping each other in both the transverse direction and the vertical direction. This minimizes the space occupied by the power control unit 41B and the on-board charging unit 42 in the downward direction DW from the cargo bed 18 of the cargo section 13 in the transverse direction and the vertical direction.
(5) The charging inlet 44 is arranged in the rearward direction RR from the doors for the vehicle occupants in the PHEV 100. Further, as described above, the on-board charging unit 42 is arranged in the downward direction DW from the cargo bed 18 of the cargo section 13. This facilitates the wiring of the charging inlet 44 and the on-board charging unit 42.

### Other Embodiments

The above embodiments may be modified as described below. The above embodiments and the following modifications may be combined as long as there is technical consistency.

In the above embodiments, the power control units 41 and 41B and the on-board charging unit 42 are arranged in the downward direction DW from the cargo bed 18 of the cargo section 13. However, the power control units 41 and 41B may be arranged at different locations.

The location of the battery 40 in the PHEV 10 of the first embodiment may be changed. For example, the battery 40 may be arranged between the left and right side members 31 as long as sufficient space for the battery 40 can be provided.

The charging inlet 44 may be arranged at a location differing from the above embodiments as long as the wiring for connection of the on-board charging unit 42 can be laid out.

The engine 20 does not have to be of a type with a V-shaped cylinder arrangements. Further, the engine 20 may be arranged in the transverse direction in the engine compartment 17

The passenger compartment 14 for each PHEV 10 and 100 includes the front seats and a rear seat in two rows. However, the layout of the seats can be changed.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A plug-in hybrid electric vehicle (10) of a pickup truck type, the plug-in hybrid electric vehicle (10) comprising:
an engine (20) configured to generate rotational power through combustion of fuel, wherein the rotational power is transmitted to wheels;
a rechargeable battery (40) supplied with electric power from an external power source;
a motor (22, 102, 104) configured to generate the rotational power with electric power supplied from the battery (40);
an on-board charging unit (42) configured to convert electric power supplied from the external power source and supply the converted electric power to the battery (40);
a power control unit (41, 41A, 41B) configured to control electric power of the motor (22, 102, 104);
a cabin section (11) including a passenger compartment (14) having a seat (15, 16) configured to accommodate a vehicle occupant;
a front section (12) located frontward from the cabin section (11) and including an engine compartment (17) where the engine (20) is arranged;
a cargo section (13) located rearward from the cabin section (11) and including a cargo bed (18) having an upper opening; and
a frame (30) including left and right side members (31) extending in a front-rear direction, wherein the left and right side members (31) are located downward from the passenger compartment (14) of the cabin section (11) and are located downward from the cargo bed (18) of the cargo section (13),
wherein the on-board charging unit (42) is arranged downward from the cargo bed (18) of the cargo section (13).

2. The plug-in hybrid electric vehicle (10) according to claim 1, wherein the power control unit (41, 41B) is arranged downward from the cargo bed (18) of the cargo section (13).

3. The plug-in hybrid electric vehicle (10) according to claim 2, wherein the power control unit (41, 41A, 41B) and the on-board charging unit (42) are arranged overlapping each other in a front-rear direction.

4. The plug-in hybrid electric vehicle (10) according to claim 2, wherein the power control unit (41, 41A, 41B) and the on-board charging unit (42) are arranged overlapping each other in a transverse direction.

5. The plug-in hybrid electric vehicle (10) according to any one of claims 2 to 4, wherein the power control unit (41, 41A, 41B) and the on-board charging unit (42) are arranged overlapping each other in a vertical direction.

6. The plug-in hybrid electric vehicle (10) according to claim 3, wherein the power control unit (41, 41A, 41B) and the on-board charging unit (42) are arranged overlapping each other in a transverse direction.

7. The plug-in hybrid electric vehicle (10) according to any one of claims 1 to 6, wherein the battery (40) is arranged downward from the seat (15, 16) of the cabin section (11) and upward from the side members (31).

8. The plug-in hybrid electric vehicle (10) according to any one of claims 1 to 6, wherein the battery (40) is arranged between the left and right side members (31).

9. The plug-in hybrid electric vehicle (10) according to any one of claims 1 to 8, wherein a drive shaft (24, 25) connected to the engine (20) by a transmission (21) and the motor (22, 102, 104), an exhaust pipe (33) configured to guide exhaust gas rearward from the engine (20), and a fuel tank (35) containing fuel are arranged between the left and right side members (31) of the frame (30).
